# FASCICULE DE BREVET EUROPEEN

(11) **EP 1 757 053 B1**
(45) Date de publication et mention de la délivrance du brevet: **26.03.2008**
(21) Numéro de dépôt: 05742836.9
(22) Date de dépôt: 04.04.2005
(51) Int. Cl.: H04L 25/49, G01C 23/00, H03M 5/14, H03M 13/03

(54) **PROCEDE DE TRANSMISSION SERIE DE DONNEES ENTRE UN EMETTEUR ET UN RECEPTEUR**
VERFAHREN ZUR SERIELLEN ÜBERTRAGUNG VON DATEN ZWISCHEN SENDER UND EMPFÄNGER
METHOD FOR SERIALLY TRANSMITTING DATA BETWEEN A TRANSMITTER AND A RECEIVER

(30) Priorité: 09.04.2004 FR 0403768
(43) Date de publication de la demande: 28.02.2007
(73) Titulaire: Thales, 92526 Neuilly Sur Seine (FR)
(72) Inventeur: CHESNE, Philippe, F-94117 Arcueil (FR); IZARD, Christophe, F-94117 Arcueil (FR)
(74) Mandataire: Collet, Alain
(86) Numéro de dépôt international: PCT/EP2005/051505
(87) Numéro de publication internationale: WO 2005/109807

(56) Documents cités:
- EP-A- 0 712 223
- WO-A-99/62200
- US-B1- 6 557 124

## Description

L'invention se rapporte à un procédé de transmission série de données série entre un émetteur et un récepteur. L'invention trouve une utilité particulière sur une liaison réalisée entre deux dispositifs électroniques embarqués en aéronautique.

De façon connue, une liaison série est réalisée au moyen d'un conducteur électrique reliant un émetteur et un récepteur. L'émetteur envoie sur la liaison un mot par exemple codé sur huit bits. Le mot comporte sept bits de données suivis d'un bit de parité permettant au récepteur de vérifier l'intégrité du mot. Le récepteur doit être en permanence synchronisé sur les mots transmis par l'émetteur. Cette synchronisation est par exemple obtenue au moyen de composants électroniques du récepteur agencés de façon à être en permanence sensibles à tout changement d'état logique sur la liaison. On utilise par exemple une bascule dont l'entrée est connectée à la liaison et dont la sortie permet de charger un registre. Le chargement doit se faire à la fréquence imposée à la liaison série par l'émetteur. Le registre a la taille d'un mot transmis sur la liaison en l'occurrence huit bits. Lorsque le registre est plein il envoie une information à un processeur pour que ce dernier traite le mot reçu par le récepteur. Ce type de réalisation d'une liaison série nécessite une synchronisation de l'émetteur et du récepteur, des composants spécifiques à la liaison ainsi qu'une programmation particulière du processeur.

Le document US6557124 B1 (ELEFTHERIOU EVANGELOS S ET AL) 29 avril 2003 (2003.04.29) divulgue un procédé de transmission série de données entre un émetteur et un récepteur, les données étant exprimées au moyen de mots prédéfinis comprenant des bits consécutifs, chaque bit se trouvant dans un état logique déterminé parmi deux états logiques possibles.

Dans les systèmes embarqués, notamment en aéronautique, on cherche à réduire la taille des différents éléments formant le système. Lorsqu'il est nécessaire de faire dialoguer différents éléments entre eux, il est parfois important de ne pas alourdir ces éléments avec des composants nécessaires à la liaison. On peut également être contraint par un taux de charge du processeur déjà important, et la programmation particulière du processeur pour faire fonctionner la liaison peut faire dépasser le taux de charge maximum admissible.

L'invention vise à pallier les problèmes cités plus haut en proposant un procédé de transmission série de données limitant les composants et la programmation nécessaire.

A cet effet, l'invention a pour objet un procédé de transmission série de données entre un émetteur et un récepteur, les données étant exprimées au moyen de mots prédéfinis comprenant des bits consécutifs, chaque bit se trouvant dans un état logique déterminé parmi deux états logiques possibles, caractérisé en ce que des changements d'état logique entre deux bits émis par l'émetteur n'interviennent que selon une première période sensiblement régulière, en ce que le récepteur ne lit les bits reçus de l'émetteur que selon une seconde période sensiblement régulière, en ce que la première et la seconde période sont sensiblement égales, en ce que chaque mot émis comprend un premier nombre de bits consécutifs identiques au premier état logique, le premier nombre étant au moins égal à deux, suivi d'au moins deux bits consécutifs identiques au second état logique, en ce qu'entre deux mots distincts, le nombre de bits consécutifs identiques au premier état logique de chacun diffère d'au moins trois.

L'invention sera mieux comprise et d'autres avantages apparaîtront à la lecture de la description détaillée d'un mode de réalisation donné à titre d'exemple, description illustrée par le dessin joint dans lequel :
La figure 1 représente une liaison entre un émetteur et un récepteur ;
la figure 2 représente sous forme de chronogramme la périodicité des changements d'état possibles à l'émission et la périodicité à laquelle la réception est réalisée ;
la figure 3 représente trois mots distincts ;
la figure 4 illustre l'interprétation possible faite par le récepteur ;
les figures 5, 6a, 6b et 6c illustrent une utilisation d'un procédé conforme à l'invention dans le dialogue entre deux instruments.

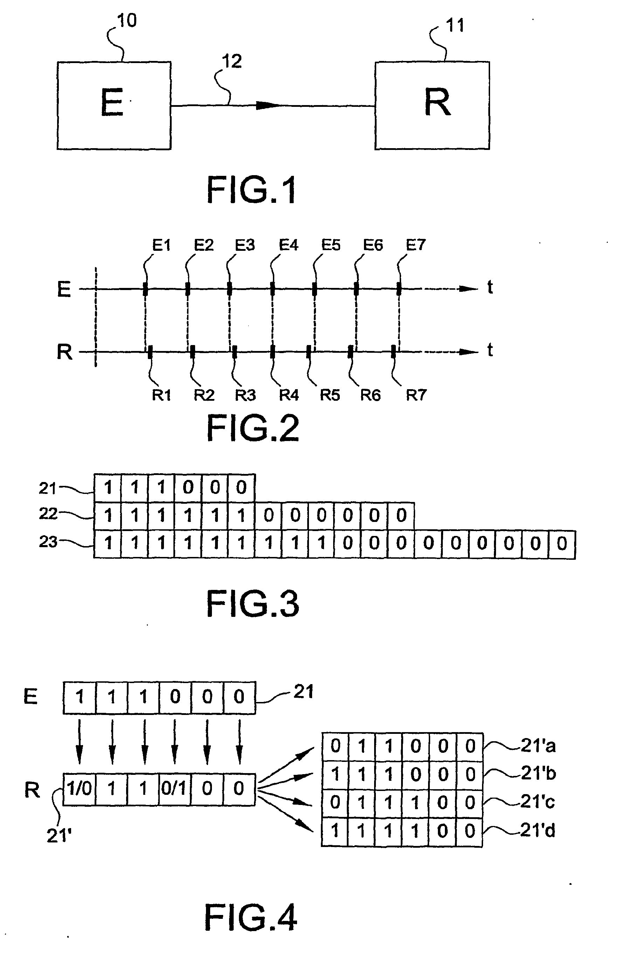

La figure 1 représente un émetteur 10 et un récepteur 11 entre lesquels une liaison 12 permet la transmission de données entre l'émetteur 10 et le récepteur 11. La liaison 12 ne comporte par exemple qu'un seul fil électrique. Les données sont exprimées en mots comprenant des bits. Chaque bit se trouve dans un état logique déterminé parmi deux états logiques possibles noté 0 et 1. Lorsque la liaison 12 est électrique, l'état logique 0 correspond par exemple à une tension électrique présente sur la liaison 12 proche de 0V et l'état logique 1 correspond quant à lui, par exemple, à une tension proche de 5V.

La figure 2 représente sous forme de chronogramme sur une première ligne de temps notée E, des instants E1 à E7 où un changement d'état est susceptible d'intervenir sur la liaison 12. Les changements d'état sont réalisés par l'émetteur 10. La périodicité de ces changements d'état est sensiblement régulière. La figure 2 représente également sous forme de chronogramme sur une seconde ligne de temps notée R, des instants R1 à R7 où le récepteur 11 peut lire l'état logique présent sur la liaison 12. La périodicité des instants Ri est sensiblement régulière et sensiblement égale à celle des changements d'état, i représentant un nombre entier qui sur la figure 2 est compris entre 1 et 7. Pour simplifier la réalisation du dispositif, le récepteur 11 ne lit l'état logique que lors des instants Ri. L'émetteur 10 et le récepteur 11 comportent par exemple chacun un processeur effectuant des tâches de façon cyclique. Le processeur de l'émetteur 10 réalise les changements d'état en début de son cycle. De même, le processeur du récepteur 11 réalise l'opération de lecture en début de son cycle. Pour mettre en oeuvre l'invention, il n'est pas nécessaire de synchroniser les processeurs de l'émetteur 10 et du récepteur 11. Une telle synchronisation nécessiterait une liaison supplémentaire entre l'émetteur 10 et le récepteur 11. L'invention permet de se passer de cette liaison supplémentaire. Pour mettre en oeuvre l'invention il suffit que la périodicité des changements d'état intervenant aux instants Ei soit sensiblement égale à celle des instants Ri. La figure 2 illustre une légère désynchronisation entre l'émetteur 10 et le récepteur 11. Les instants R1, R2 et R3 sont légèrement postérieurs aux instants E1 à E3 respectivement. Les instants E4 et R4 sont simultanés et les instants R5 à R7 sont légèrement antérieurs aux instants E5 à E7 respectivement. Une telle désynchronisation permet néanmoins de mettre en oeuvre un procédé conforme à l'invention.

Un langage entre l'émetteur 10 et le récepteur 11 utilise plusieurs mots dont trois exemples 21, 22 et 23 sont donnés sur la figure 3. Le premier état logique est noté 1 et le second état logique est noté 0. Dans la différence de périodicité entre les instants Ei et les instants Ri, on peut admettre un décalage pouvant aller jusqu'à une période d'écart sur la durée du mot le plus long utilisé dans le langage comme par exemple le mot 23 si le langage ne comprend que trois mots.

Une caractéristique essentielle réside dans la différentiation des mots du langage. Chaque mot émis comprend un premier nombre de bits consécutifs identiques au premier état logique 1, le premier nombre étant au moins égal à deux, suivi d'au moins deux bits consécutifs identiques au second état logique 0, Entre deux mots distincts, le nombre de bits consécutifs identiques au premier état logique 1 de chacun diffère d'au moins trois. Le mot 21 comprend trois bits consécutifs identiques à l'état logique 1 suivi de trois bits consécutifs identiques à l'état logique 0. Le mot 22 comprend six bits consécutifs identiques à l'état logique 1 suivi de six bits consécutifs identiques à l'état logique 0. Le mot 22 comprend neuf bits consécutifs identiques à l'état logique 1 suivi de neuf bits consécutifs identiques à l'état logique 0. Le mot 21 forme le mot le plus court dans le langage. Pour assurer la reconnaissance du mot 21 par le récepteur 11, il suffit qu'il comprenne deux bits consécutifs identiques à l'état logique 1 suivi de deux bits consécutifs identiques à l'état logique 0. Néanmoins, on améliore la fiabilité de reconnaissance du mot 21 par le récepteur 11, lorsque le mot comprenant le plus petit nombre de bits, en l'occurrence le mot 21, comprend trois bits consécutifs identiques à l'état logique 1. Chacun des mots suivants, ordonnés par nombre de bits croissants, comprend un nombre de bits consécutifs à l'état logique 1 égal au nombre de bits consécutifs à l'état logique 1 du mot précédent plus trois. Toujours pour améliorer la fiabilité de reconnaissance des mots par le récepteur 11, pour un mot donné, le nombre de bits consécutifs à l'état logique 0 est égal au nombre de bits consécutifs à l'état logique 1. Ceci permet notamment de se passer de bit de parité envoyé généralement en fin de mot et permettant au récepteur 11 de contrôler qu'un mot est correctement reçu.

Le procédé de reconnaissance des mots par le récepteur 11 peut se dérouler de la façon suivante : lorsque le récepteur reçoit un mot, il l'identifie comme étant un mot prédéfini si le nombre de bits reçu de façon consécutive à l'état logique 1 est égal au nombre de bit émis de façon consécutive à l'état logique 1 plus ou moins un bit, et si le nombre de bits reçu de façon consécutive à l'état logique 0 est égal au nombre de bit émis de façon consécutive à l'état logique 0 plus ou moins un bit. Le procédé de reconnaissance des mots est illustré à l'aide de la figure 4. L'émetteur 10 envoie sur la liaison 12 le mot 21 déjà décrit à l'aide de la figure 3. Le mot 21 est précédé d'au moins un bit à l'état 0. Ce bit à l'état 0 peut être le dernier bit du mot précédant émis par l'émetteur 10. Le mot 21 reçu par le récepteur 11 peut être différent. Il est alors appelé : mot 21' qui peut prendre quatre valeurs possibles notées 21'a: 011000, 21'b: 111000, 21'c: 011100 et 21'd : 111100. On a trois bits émis à l'état logique 1 suivi de trois bits émis à l'état logique 0. Quant au mot 21' reçu si le nombre de bits reçu de façon consécutive à l'état logique 1 est égal à 2, 3 ou 4, et si, par la suite, le nombre de bits reçus de façon consécutive à l'état logique 0 est égal à 2, 3 ou 4, c'est-à-dire l'un des mots 21'a, 21'b, 21'c ou 21'd, le récepteur 11 interprétera l'une des quatre combinaisons possibles comme correspondant au mot 21. De même, il est aisé de comprendre que si le mot 22 est émis, le mot 22' reçu ne pourra comprendre qu'un nombre de bits reçus à l'état logique 1 ne pouvant être que 5, 6 ou 7 ce qui permet de différencier de façon certaine le mot 22' du mot 21' et pour améliorer la sécurité de la transmission, dans le mot 22' les bits à l'état logique 1 ne peuvent être suivi que de 5,6 ou 7 bits à l'état logique 0.

On a vu plus haut que le mot 21 est précédé d'au moins un bit à l'état 0. De façon plus générale, pour chaque mot du langage, le bit précédent le premier bit au premier état logique 1 est un bit au second état logique 0. Ainsi, le récepteur 11 commence à compter les bits à l'état 1 lorsqu'il voit un front montant, ou plus précisément lorsqu'il détecte un état logique 0 lors d'un cycle et qu'il détecte un état logique 1 au cycle suivant. Ceci permet de se passer de bit annonçant le début d'un mot, bit bien connu dans la littérature anglo-saxonne sous le nom de « Start bit ».

Des perturbations peuvent intervenir sur la liaison 12. Par exemple, un bit d'un état logique peut être substitué par un bit de l'autre état logique. Pour illustrer cet exemple le mot 21 peut être reçu de la façon suivante : 101000. Le second bit du mot 21 normalement à l'état logique 1 a été lu par le récepteur 11 comme se trouvant à l'état logique 0. Pour pallier ce problème, dans le procédé de transmission, on définit que, lorsque le récepteur 11 n'identifie pas un mot reçu comme étant un mot prédéfini, le récepteur 11 déclare le mot reçu invalide et attend le mot suivant.

Si les perturbations persistent, on prévoit que, lorsque le récepteur 11 déclare trois mots reçus successifs invalides, le récepteur 11 déclare alors la liaison 12 invalide. Dans la pratique, on a simulé un environnement de l'émetteur 10, du récepteur 11 et de la liaison 12 relativement perturbé aboutissant à une désynchronisation de 10% des mots transmis. Avec un tel environnement, le calcul de fiabilité donne une probabilité de liaison déclarée invalide toutes les 10¹⁴ heures, ce qui représente une excellente fiabilité.

Avantageusement, dans la transmission de données entre l'émetteur 10 et le récepteur 11, les mots les plus fréquemment utilisés sont choisis parmi les mots comportant le plus petit nombre de bits. On améliore ainsi la rapidité de transmission moyenne sur la liaison.

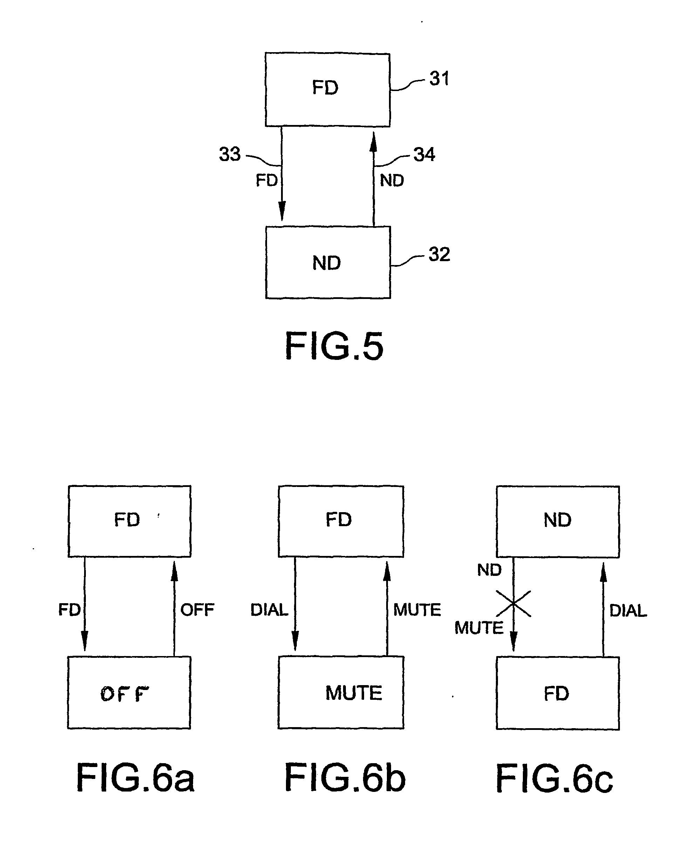

Illustré par les figures 5, 6a, 6b et 6c, un exemple de mise en oeuvre d'un procédé conforme à l'invention est donné dans le domaine aéronautique. Dans des avions gros porteurs de nouvelle génération, il est prévu d'installer dans le cockpit deux instruments combinés de secours 31 et 32, appelés par la suite ICS, afin d'améliorer la sécurité du pilotage. Un ICS permet de mesurer de façon autonome l'altitude, la vitesse, et l'attitude de l'avion. L'ICS est utilisé en cas de panne des instruments ordinaires mis à la disposition du pilote de l'avion. L'ICS permet également un affichage variable. Chaque ICS 31 ou 32 peut afficher soit une page dédiée aux paramètres de vol, page notée FD, soit une page dédiée à la navigation, page notée ND, soit une page exempte de tout affichage, notée OFF. Le pilote a la possibilité de changer de page sur chacun des ICS par appui sur un bouton. Il peut ainsi modifier l'affichage de chacun des ICS 31 et 32 en boucle de la page FD à la page ND puis à la page OFF. Chaque ICS 31 et 32 comporte chacun une fonction d'émetteur et une fonction de récepteur telles que décrites précédemment. L'émetteur de l'ICS 31 est relié au récepteur de l'ICS 32 sur une liaison 33 et l'émetteur de l'ICS 32 est relié au récepteur de l'ICS 31 sur une liaison 34. Chaque ICS 31 et 32 émet en permanence un mot correspondant à la page qu'il affiche. Un mot FD est émis lorsqu'un des ICS 31 ou 32 affiche la page FD. Le mot FD a par exemple le même codage que le mot 21 décrit à l'aide de la figure 3. Un mot ND est émis lorsqu'un des ICS 31 ou 32 affiche la page ND. Le mot ND a par exemple le même codage que le mot 22. Un mot OFF est émis lorsqu'un des ICS 31 ou 32 affiche la page OFF. Le mot OFF a, par exemple, le même codage que le mot 23. Dans le langage entre les ICS 31 et 32, on ajoute un mot MUTE correspondant à un état logique 0 ou 1 permanent signifiant que l'ICS émettant ce mot est en panne ou n'est pas alimenté ou encore que la liaison sur laquelle est émis le mot MUTE est coupée. Un mot DIAL est émis lorsqu'un des ICS 31 ou 32 reçoit le mot MUTE. Le mot DIAL comporte par exemple 12 bits à l'état logique 1 suivis de 12 bits à l'état logique 0 pour différencier ce mot des autres mots FD, ND et OFF. L'affichage des deux ICS est régi par deux règles :
- Ne jamais afficher la même page sur les deux ICS
- Afficher en permanence une page FD sur l'un des deux ICS.

Ces deux règles sont applicables quels que soient les changements d'affichage demandés par le pilote sur l'un des ICS. Au besoin, les ICS reconfigurent leurs affichages pour respecter les deux règles. En pratique, si un ICS reçoit le mot FD et qu'il affiche une page FD, il se reconfigure pour afficher une page ND. Ceci est illustré au moyen de la figure 5. Si un ICS reçoit le mot MUTE, ND ou OFF, il doit vérifier qu'il affiche une page FD, si non, il se reconfigure pour afficher une page FD. Ceci est illustré au moyen des figures 6a, 6b et 6c. Si un ICS reçoit le mot DIAL, il doit vérifier qu'il n'affiche pas une page FD, si non, il se reconfigure pour afficher une page ND. Ceci est illustré au moyen des figures 6b et 6c.

Un autre avantage lié à l'invention est dû au fait que les mots du langage entre l'émetteur 10 et le récepteur 11 ont tous des longueurs différentes. Dans le cas d'un dialogue entre deux équipements comportant chacun une fonction d'émetteur et une fonction de récepteur, comme par exemple les deux ICS 31 et 32, lorsque le récepteur d'un ICS donné déclare un mot valide, il peut être amené à se reconfigurer et donc à interrompre immédiatement l'émission du mot correspondant à l'affichage qu'il avait avant reconfiguration, évitant ainsi tout effet de va et vient dans le dialogue entre les deux équipements.

## Revendications

1. Procédé de transmission série de données entre un émetteur (10) et un récepteur (11), les données étant exprimées au moyen de mots prédéfinis (21, 22, 23) comprenant des bits consécutifs, chaque bit se trouvant dans un état logique déterminé parmi deux états logiques possibles (0,1), **caractérisé en ce que** des changements d'état logique entre deux bits émis par l'émetteur (10) n'interviennent que selon une première période sensiblement régulière, **en ce que** le récepteur (11) ne lit les bits reçus de l'émetteur (10) que selon une seconde période sensiblement régulière, **en ce que** la première et la seconde période sont sensiblement égales, **en ce que** chaque mot (21, 22, 23) émis comprend un premier nombre de bits consécutifs identiques au premier état logique (1), le premier nombre étant au moins égal à deux, suivi d'au moins deux bits consécutifs identiques au second état logique (0), **en ce qu'**entre deux mots (21, 22, 23) distincts, le nombre de bits consécutifs identiques au premier état logique (1) de chacun diffère d'au moins trois.

2. Procédé selon la revendication 1, **caractérisé en ce que** le bit précédent le premier bit au premier état logique (1) est un bit au second état logique (0).

3. Procédé selon l'une des revendications précédentes, **caractérisé en ce que** le mot (21) comprenant le plus petit nombre de bits comprend trois bits consécutifs identiques au premier état logique (1).

4. Procédé selon l'une des revendications précédentes, **caractérisé en ce que** pour un mot (21, 22, 23) donné, le nombre de bits consécutifs au second état logique (0) est égal au nombre de bits consécutifs au premier état logique (1).

5. Procédé selon l'une des revendications précédentes, **caractérisé en ce que** dans la transmission de données entre l'émetteur (10) et le récepteur (11), les mots (21, 22, 23) les plus fréquemment utilisés sont choisis parmi les mots comportant le plus petit nombre de bits.

6. Procédé selon l'une des revendications précédentes, **caractérisé en ce que** lorsque le récepteur (11) reçoit un mot (21', 22', 23'), il l'identifie comme étant un mot prédéfini si le nombre de bits reçus de façon consécutive au premier état logique (1) est égal au nombre de bit émis de façon consécutive au premier état logique (1) plus ou moins un bit, et si le nombre de bits reçu de façon consécutive au second état logique (0) est égal au nombre de bit émis de façon consécutive au second état logique (0) plus ou moins un bit.

7. Procédé selon l'une des revendications précédentes, **caractérisé en ce que** lorsque le récepteur (11) n'identifie pas un mot reçu comme étant un mot prédéfini, le récepteur (11) déclare le mot reçu invalide et attend le mot suivant.

8. Procédé selon la revendication 7, **caractérisé en ce que** lorsque le récepteur (11) déclare trois mots reçus successifs invalides, le récepteur (11) déclare la liaison (12) invalide.

## Claims

1. Method of serially transmitting data between a transmitter (10) and a receiver (11), the data being expressed by means of predefined words (21, 22, 23) comprising consecutive bits, each bit being in a determined logic state out of two possible logic states (0, 1), **characterized in that** changes of logic state between two bits transmitted by the transmitter (10) occur only according to a first substantially regular period, **in that** the receiver (11) reads the bits received from the transmitter (10) only according to a second substantially regular period, **in that** the first and the second period are substantially equal, **in that** each word (21, 22, 23) transmitted comprises a first number of identical consecutive bits in the first logic state (1), the first number being at least equal to two, followed by at least two identical consecutive bits in the second logic state (0), **in that** between two distinct words (21, 22, 23), the number of identical consecutive bits in the first logic state (1) of each differs by at least three.

2. Method according to Claim 1, **characterized in that** the bit preceding the first bit in the first logic state (1) is a bit in the second logic state (0).

3. Method according to either of the preceding claims, **characterized in that** the word (21) comprising the smallest number of bits comprises three identical consecutive bits in the first logic state (1).

4. Method according to one of the preceding claims, **characterized in that** for a given word (21, 22, 23), the number of consecutive bits in the second logic state (0) is equal to the number of consecutive bits in the first logic state (1).

5. Method according to one of the preceding claims, **characterized in that** in the transmission of data between the transmitter (10) and the receiver (11), the most frequently used words (21, 22, 23) are chosen from among the words comprising the smallest number of bits.

6. Method according to one of the preceding claims, **characterized in that** when the receiver (11) receives a word (21', 22', 23'), it identifies it as being a predefined word if the number of bits received consecutively in the first logic state (1) is equal to the number of bit transmitted consecutively in the first logic state (1) plus or minus a bit, and if the number of bits received consecutively in the second logic state (0) is equal to the number of bit transmitted consecutively in the second logic state (0) plus or minus a bit.

7. Method according to one of the preceding claims, **characterized in that** when the receiver (11) does not identify a word received as being a predefined word, the receiver (11) declares the word received invalid and waits for the next word.

8. Method according to Claim 7, **characterized in that** when the receiver (11) declares three successive words received invalid, the receiver (11) declares the link (12) invalid.

## Patentansprüche

1. Verfahren zur seriellen Übertragung von Daten zwischen einem Sender (10) und einem Empfänger (11), wobei die Daten mittels vordefinierter Wörter (21, 22, 23) ausgedrückt werden, die aufeinanderfolgende Bits aufweisen, wobei jedes Bit sich in einem logischen Zustand befindet, der unter zwei möglichen Zuständen (0, 1) bestimmt wird, **dadurch gekennzeichnet, dass** logische Zustandsänderungen zwischen zwei vom Sender (10) gesendeten Bits nur gemäß einer ersten im Wesentlichen regelmäßigen Periode intervenieren, dass der Empfänger (11) die vom Sender (10) empfangenen Bits nur gemäß einer zweiten im Wesentlichen regelmäßigen Periode liest, dass die erste und die zweite Periode im Wesentlichen gleich sind, dass jedes gesendete Wort (21, 22, 23) eine erste Anzahl von aufeinanderfolgenden Bits gleich dem ersten logischen Zustand (1) aufweist, wobei die erste Anzahl mindestens gleich zwei ist, gefolgt von mindestens zwei aufeinanderfolgenden Bits gleich dem zweiten logischen Zustand (0), dass zwischen zwei unterschiedlichen Wörtern (21, 22, 23) die Anzahl von aufeinanderfolgenden Bits gleich dem ersten logischen Zustand (1) von jedem um mindestens drei unterschiedlich ist.

2. Verfahren nach Anspruch 1, **dadurch gekennzeichnet, dass** das das Bit, das dem ersten Bit im ersten logischen Zustand (1) vorausgeht, ein Bit im zweiten logischen Zustand (0) ist.

3. Verfahren nach einem der vorhergehenden Ansprüche, **dadurch gekennzeichnet, dass** das Wort (21), das die kleinste Anzahl von Bits aufweist, drei aufeinanderfolgende Bits gleich dem ersten logischen zustand (1) aufweist.

4. Verfahren nach einem der vorhergehenden Ansprüche, **dadurch gekennzeichnet, dass** für ein gegebenes Wort (21, 22, 23) die Anzahl von aufeinanderfolgenden Bits im zweiten logischen Zustand (0) gleich der Anzahl von aufeinanderfolgenden Bits im ersten logischen Zustand (1) ist.

5. Verfahren nach einem der vorhergehenden Ansprüche, **dadurch gekennzeichnet, dass** bei der Datenübertragung zwischen dem Sender (10) und dem Empfänger (11) die am häufigsten verwendeten Wörter (21, 22, 23) aus den Wörtern ausgewählt werden, die die kleinste Anzahl von Bits aufweisen.

6. Verfahren nach einem der vorhergehenden Ansprüche, **dadurch gekennzeichnet, dass** der Empfänger (11), wenn er ein Wort (21', 22', 23') empfängt, es als ein vordefiniertes Wort identifiziert, wenn die Anzahl von aufeinanderfolgend im ersten logischen Zustand (1) empfangenen Bits gleich der Anzahl von aufeinanderfolgend im ersten logischen Zustand (1) gesendeten Bits plus oder minus ein Bit ist, und wenn die Anzahl von aufeinanderfolgend im zweiten logischen Zustand (0) empfangenen Bits gleich der Anzahl von aufeinanderfolgend im zweiten logischen Zustand (0) gesendeten Bits plus oder minus ein Bit ist.

7. Verfahren nach einem der vorhergehenden Ansprüche, **dadurch gekennzeichnet, dass**, wenn der Empfänger (11) ein empfangenes Wort nicht als ein vordefiniertes Wort identifiziert, der Empfänger (11) das empfangene Wort als ungültig erklärt und auf das folgende Wort wartet.

8. Verfahren nach Anspruch 7, **dadurch gekennzeichnet, dass**, wenn der Empfänger (11) drei aufeinanderfolgende empfangene Wörter als ungültig erklärt, der Empfänger (11) die Verbindung (12) als ungültig erklärt.
